Europäisches Patentamt

European Patent Office

Office européen des brevets

(19)

(11) **EP 1 160 588 B1**

(12) **EUROPEAN PATENT SPECIFICATION**

(45) Date of publication and mention
of the grant of the patent:
**19.03.2003 Bulletin 2003/12**

(51) Int Cl.[7]: **G02B 5/04**, B23K 26/06

(21) Application number: **01201845.3**

(22) Date of filing: **16.05.2001**

(54) **Apparatus for shaping a laser beam for welding, particularly for the goldsmith sector**

Vorrichtung zum Formen des Querschnitts eines Laserstrahls zum Schweissen, besonders für Goldschmiede-Anwendungen

Appareil de modification de la section d'un faisceau laser pour le soudage, en particulier pour l'orfèvrerie

(84) Designated Contracting States:
**AT BE CH CY DE DK ES FI FR GB GR IE IT LI LU MC NL PT SE TR**

(30) Priority: **29.05.2000 IT MI001182**

(43) Date of publication of application:
**05.12.2001 Bulletin 2001/49**

(73) Proprietor: **CONSIGLIO NAZIONALE DELLE RICERCHE**
**00185 Roma (IT)**

(72) Inventor: **Covelli, Luigi**
**20127 Milano (IT)**

(74) Representative: **Mittler, Enrico**
**c/o Mittler & C. s.r.l.,**
**Viale Lombardia, 20**
**20131 Milano (IT)**

(56) References cited:
**DE-U- 29 609 788       FR-A- 2 559 590**
**US-A- 4 948 233        US-A- 5 632 083**
**US-A- 5 864 430**

## Description

The present invention refers to an apparatus suitable for focusing a laser beam for welding, for example a Nd-YAG laser, in which YAG is the acronym of Yttrium, Aluminum, Garnet, in particular for the goldsmith sector.

Focusing devices for welding of links of a chain in a precious material, such as gold, silver, platinum etc., are already known, using Nd-YAG laser, emitting a monochromatic radiation with a wavelength of 1064 nm, which with a head firing, i.e. with a direct emission of energy from the laser, can carry out a welding without non-precious filling material, avoiding a degradation of the carat weight of the jewel.

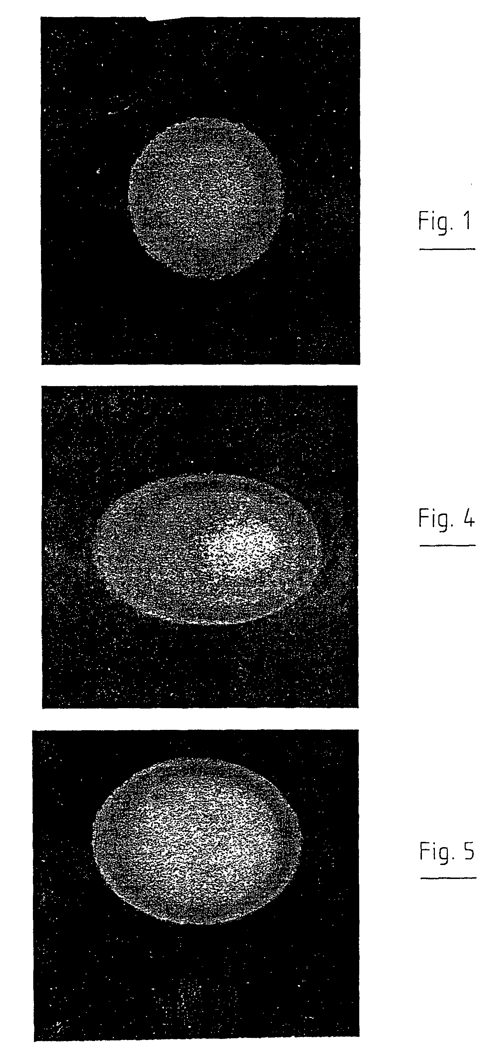

Nevertheless these focusing devices carry out a welding with an impression on the surface of the link which faithfully traces the energy distribution in output from the laser source used, as shown in Figure 1 in which it can be noted that the impact section of a laser of a known apparatus is circular, while in Figure 1bis it can be seen what type of energy distribution such an impact section has, that is a Gaussian type distribution.

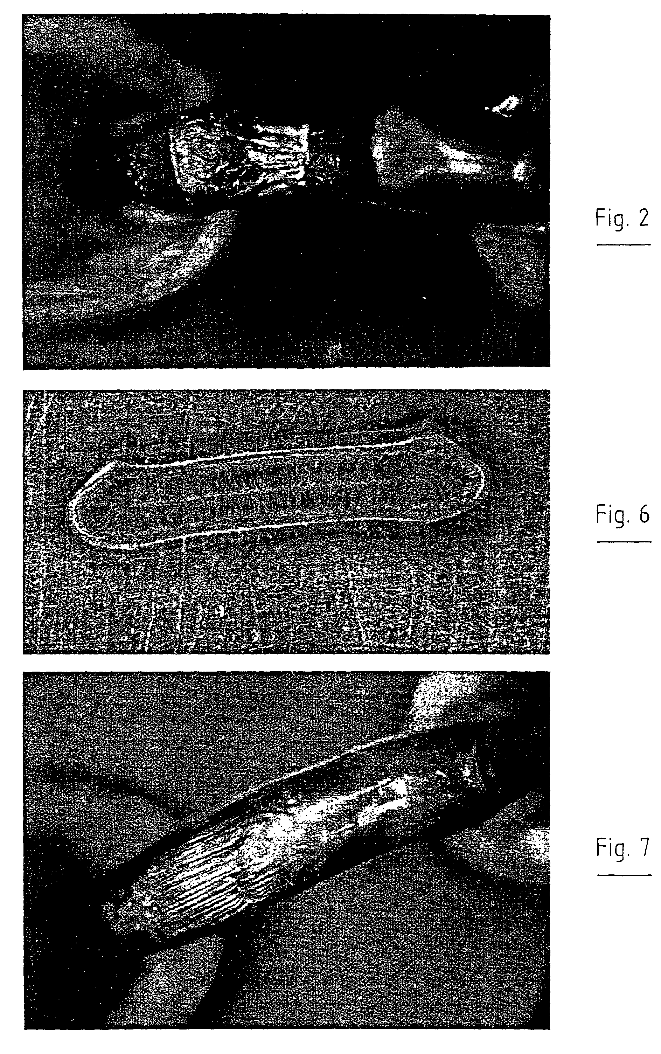

As known, this emission in the case of a Nd-YAG laser is the $TEM_{00}$ type and it has a Gaussian type distribution. In the case of a laser with these characteristics the energy produces a vast crater in the zone of junction between two links, deeply scouring the centre part of the junction of the links themselves, as shown in Figure 2.

This is due to the fact that the Gaussian distribution has a high availability of energy concentrated at the centre of the emission area.

This compromises the result of the welding and ruins the appearance of the artefact making the surface around the emission area rather deformed. DE 296 09 788 U1 is regarded as closest prior art. This document describes an apparatus according to the preamble of claim 1.

In view of the state of the technique described, the object of the present invention is to provide a uniform energy distribution of the incident beam over the whole area of the impression, and to make sure that the ends of the altered zone of the laser are symmetric and uniform.

In accordance with the present invention, said object is reached through an apparatus suitable for focusing a laser beam for welding, in particular for the goldsmith sector, comprising a laser source, a converging field lens, close to said laser source, suitable for making the laser beam in output from said source parallel, a converging focusing lens, suitable for making the beam coming from said field lens converge onto a focal point, characterised in that it comprises a couple of optical means placed in succession between said laser source and said field lens, so that an energy distribution impression with an essentially elliptic section is obtained on said field lens.

Thanks to the present invention a uniform, clean, well-distributed and aesthetically pleasant welding can be realised.

In addition a welded zone comparable to the part that is not welded is obtained, increasing the value of the manufacture of the chain even more.

The characteristics and advantages of the present invention will become evident from the following detailed description of an embodiment thereof, illustrated as non-limiting example in the enclosed drawings, in which:

Figure 1 shows an impression of the profile of the laser beam in output from an optic fibre associated to a laser source in an apparatus according to the known technique;

Figure 1bis shows the energy distribution of the impression of Figure 1;

Figure 2 shows a photograph taken with a microscope of a welding carried out according to the known technique;

Figure 3 shows schematically the optical path of the incident beam according to the present invention;

Figure 4 shows an impression of the profile of the laser beam in output from a first optical means in an apparatus according to the present invention;

Figure 4bis shows the energy distribution of the impression of Figure 4;

Figure 5 shows an impression of the profile of the laser beam in output from a second optical means in an apparatus according to the present invention;

Figure 5bis shows the energy distribution of the impression of Figure 5;

Figure 6 shows a microscopic photograph of a section of the impression obtained with the apparatus according to the present invention;

Figure 7 shows a microscopic photograph of the result of the welding carried out with the apparatus according to the present invention;

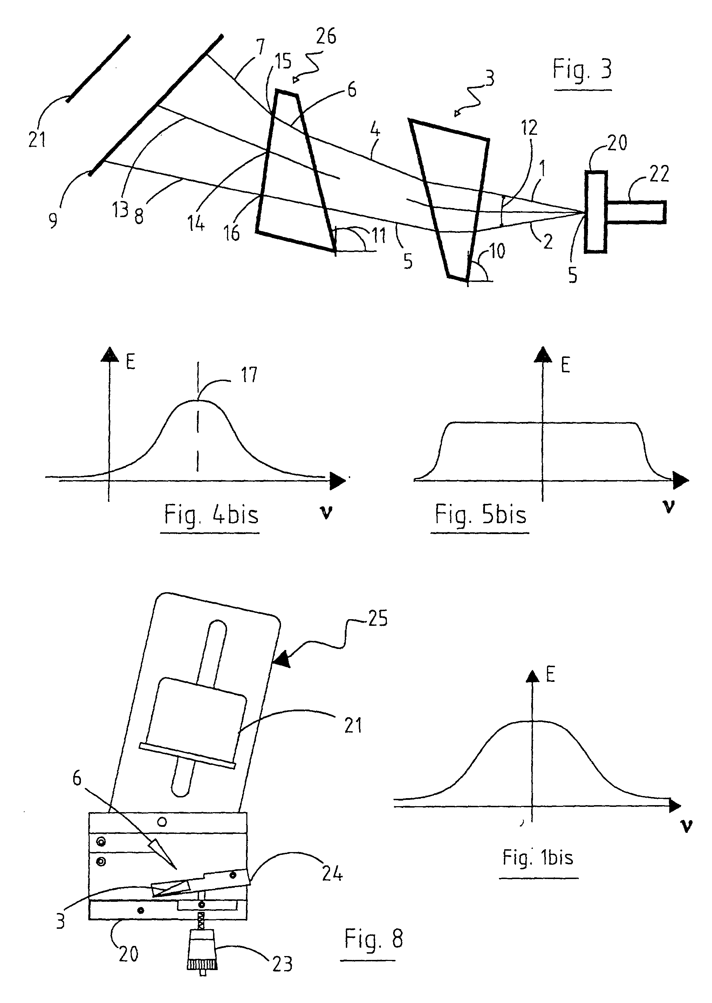

Figure 8 shows a schematic diagram of the apparatus according to the present invention.

The optical path of the incident beam in an apparatus according to the present invention is shown schematically in Figure 3.

According to what is illustrated in said Figure it can be seen that the optical path leaves from a laser source 22 in optical fibre coupled with an optical fibre attachment 20, having a generator point called source S, from which a laser beam L with an impression and an energy distribution of the type respectively shown in Figure 1 and Figure 1bis leaves. Said laser beam has contours 1 and 2 which represent the output emission of the optical fibre and the beam in question possesses, therefore, an aperture angle 12. The beam passes through a first optical means 3, consisting of an anamorphic prism, and in output acquires contours 4 and 5. Successively the so deflected beam passes through a second optical means 6, consisting of an anamorphic prism, and said beam in output acquires new contours 7 and 8. The beam generated by the source S finally indents on a lens 9, called field lens, which is a positive lens, also called converging, suitable for making the laser beam L parallel, that is suitable for projecting the laser beam itself to infinity. Finally there is a focusing lens 21, also positive and suitable for converging the laser beam coming from said lens 9 into a focal point (not present in the Figure) where the actual welding is done.

The anamorphic prisms 3 and 6, met along the optical path of the beam, have the peculiarity of deforming the input image only along one direction. They are placed with their vertexes oriented in essentially opposite directions. Therefore the two prisms 3 and 6 determine the degeneration of the image from circular to elliptic.

Thus on lens 9 there is a basically elliptic energy distribution having a precise ratio between the measurements of the axes.

In fact from the ratio between the dimension of the contours 1 and 2 and the width that the emission cone of the beam would have reached in output from the optical fibre if it had not passed through the prisms 3 and 6 the ratio between the measurements of the ellipse generated is obtained so that the ratio between the lengths of the axes of the ellipse is at least two to one (that is 2:1) and the dimensions of the major axis is 800 μm.

So that it is possible to obtain a ratio of the axes of the ellipse at least equal to the value of two to one it is extremely important to be able to measure and calculate the position of every element of the couple of prisms 3 and 6 and it is also necessary to know a series of accessory parameters such as, for example, the indices of refraction of the mirrors by which the prisms 3 and 6 are formed, the angle of aperture 12 of the output cone from the optical fibre, the position of the optical fibre in relation to prism 3, the focal length of the field lens etc..

In fact the position of the couple of prisms 3 and 6 is identified by two Cartesian coordinates and by a positioning angle 10 and 11, respectively, in which said prism 3 is regulated by means of a micrometer, then shown in Figure 8, that guarantees an overall amplitude of at least 13°, while a fixed position is assigned to said prism 6 without the possibility of moving, this because said second prism 6 has not effects on the generation of the deformed image which can be compared with those of the first prism 3, as the effect of the prism 6 consists mainly in changing the position and direction of the output beam.

In addition, in order to determine the energy distribution and thus also the geometric shape on the lens 9 it is necessary to calculate the deflection angle of the input and output radiation of the prisms 3 and 6. In fact, applying the known law of Snell, that states that a laser ray that travels in an optical means with a refraction index equal to "n1" encounters the separation surface of another optical means with an index "n2" according to an angle equal to φ1, said laser ray will be transmitted in the new means according to an angle φ2 which follows the relation:

$$(\sin \phi 1 \ / \sin \phi 2) = (n2 \ / \ n1)$$

In this way the angle of deflection of the input and output ray of the prism 3 and the input and output angle of deflection of the prism 6 can be calculated.

Successively, in order to calculate the dimension of the ellipse on the lens 9 it is necessary for the axis 13 of said lens 9 to coincide with the straight line that joins the object with the centre of the lens 9, to avoid the occurrence of the phenomenon of "astigmatism". Astigmatism is an aberration of the image that is created when the object of a spherical lens is outside the axis of the lens itself.

In the case in question it is necessary to assess the position and the direction of the output beam from the prism 6 to be able to install the focusing lens in coaxial position. To find a median output point 14 from said second anamorphic prism 6 a middle point between the points 15 and 16 is determined and an inclination of the beam is calculated with respect to a horizontal straight line as an average between the inclinations of the straight lines 7 and 8. Doing so one arrives at determining the axis on which the beam focusing lens has to be, and this guarantees the possibility of use of optics with different focal lengths, for example of 50 mm and/or 100 mm.

Finally, so that it is possible to have an elliptical energy distribution on the lens 9, said lens 9 must have such a position that it has a fixed focus and in addition the image of the optic is focused.

To do this the optical path of the beam from the output of the optical fibre to the output surface of prism 6 is calculated as an average between the two optical paths S-1-4 and S-2-5 and the value found is subtracted from the focal length of the lens 9, so the distance at which this lens 9 has to be placed.

The representation on thermographic paper of the profile of the laser beam in output from the first anamorphic prism 3 is shown in Figure 4 and it can be seen that said impression is not symmetrical, differently from the representation of Figure 1, but instead it has an energy peak moved towards the right. The energy distribution is shown in Figure 4bis and, as can be noted, there is an x-axis representing the wavelength ν and a y-axis representing the energy, in which said energy distribution has a peak 17 moved towards higher wavelengths.

The representation on thermographic paper of the profile of the laser beam in output from the second anamorphic prism 6 is shown in Figure 5 and it can be noted that said impression is symmetrical, but different from that shown in Figure 1. Said impression has an energy peak placed at the centre. This is due to the fact that the arrangement of prism 6 in a basically opposite direction to that of prism 3 determines the movement of the energy peak in an opposite direction compared with that determined by prism 3. The energy distribution is shown in Figure 5bis and, as can be noted, there is an x-axis representing the wavelengthv and y-axis representing the energy, in which said energy distribution has a zone 18 at constant energy in a wavelength interval.

A microscopic photograph of an impression section obtained with the apparatus according to the present invention is shown in Figure 6.

The photograph shows the impression of an impulse on a sheet of titanium with an enlargement of 30x. The impression left on the metal is about 2,2 mm long and the ratio between the lengths of the major axis and the minor axis is 5,5:1 which is much greater than the minimum project value (2:1). In addition the energy distribution appears very uniform on the entire area of the impression.

A microscopic photograph of the result of the welding carried out with the apparatus according to the present invention is shown in Figure 7.

According to what is shown in said photograph a uniform, clean, well distributed welding with an excellent surface appearance can be noted, which, therefore, increases the value of the aesthetic appearance of the chain link.

A schematic diagram of the apparatus according to the present invention is shown in Figure 8.

According to what is illustrated in said Figure a top view of the device suitable for focusing the laser beam can be seen, comprising a micrometer 23, suitable for regulating the position of a support 24 of the first prism 3, the second prism 6, which instead is fixed, the optical fibre attachment 20 and the focusing lens 21 with the relative support 25. The laser source with relative optical fibre, to be connected to the attachment 20, is not shown in this Figure.

Figure 8 also shows the position assumed by the prisms 3 and 6 to obtain the impression of elliptical section with uniform energy distribution on metal.

## Claims

1. Apparatus suitable for focusing a laser beam for welding, in particular for the goldsmith sector, comprising a laser source (22), a converging field lens (9), close to said laser source, suitable for making the laser beam in output from said source parallel, a converging focusing lens (21), suitable for making the beam coming from said field lens (9) converge on a focal point, **characterised in that** it comprises a couple of optical means (3, 6) arranged in succession between said laser source (22) and said field lens (9), so as to obtain on said field lens (9) an energy distribution impression with a basically elliptic section.

2. Apparatus according to claim 1, **characterised in that** said optical means (3, 6) are a couple of anamorphic prisms.

3. Apparatus according to claim 2, **characterised in that** said anamorphic prisms (3, 6) are arranged with their vertices directed in basically opposite directions form each other.

4. Apparatus according to claim 2, **characterised in that** the first anamorphic prism (3) closer to the laser source (22) has a regulation of space position controlled by a micrometer (23).

5. Apparatus according to claim 2, **characterised in that** the second anamorphic prism (6) is fixed.

6. Apparatus according to claim 1, **characterised in that** said laser source (22) is in optical fibre and an attachment (20) for optical fibre is provided.

## Patentansprüche

1. Vorrichtung, die dazu geeignet ist, einen Laserstrahl zum Schweißen, insbesondere für den Goldschmiedebereich, zu fokussieren, umfassend eine Laserquelle (22), eine Sammelfeldlinse (9) dicht an der Laserquelle, die dazu geeignet ist, den Laserstrahl im Ausgang von dieser Quelle parallel zu machen, eine Sammelfokussierlinse (21), die dazu geeignet ist, den von der Feldlinse (9) kommenden Strahl an einem Brennpunkt zu sammeln, **dadurch gekennzeichnet, daß** die Vorrichtung ein Paar von optischen Mitteln (3, 6) umfaßt, die aufeinanderfolgend zwischen der Laserquelle (22) und der Feldlinse (9) angeordnet sind, um auf der Feldlinse (9) einen Energieverteilungsabdruck mit einem grundsätzlich elliptischen Querschnitt zu erhalten.

2. Vorrichtung nach Anspruch 1, **dadurch gekennzeichnet, daß** es sich bei den optischen Mittel (3, 6) um ein Paar von anamorphen Prismen handelt.

3. Vorrichtung nach Anspruch 2, **dadurch gekennzeichnet, daß** die anamorphen Prismen (3, 6) so angeordnet sind, daß ihre Spitzen in grundsätzlich entgegengesetzte Richtungen voneinander gerichtet sind.

4. Vorrichtung nach Anspruch 2, **dadurch gekennzeichnet, daß** das näher an der Laserquelle (22) befindliche erste anamorphe Prisma (3) eine abstandsregulierbare Stellung aufweist, die durch eine Meßschraube (23) geregelt wird.

**5.** Vorrichtung nach Anspruch 2, **dadurch gekennzeichnet, daß** das zweite anamorphe Prisma (6) unverstellbar ist.

**6.** Vorrichtung nach Anspruch 1, **dadurch gekennzeichnet, daß** die Laserquelle (22) eine optische Faser ist und ein Anschluß (20) für die optische Faser vorgesehen ist.

**Revendications**

**1.** Appareil adapté pour focaliser un faisceau laser pour le soudage, en particulier pour l'orfèvrerie, comprenant une source laser (22), une lentille à champ convergent (9), près de ladite source laser, adaptée pour rendre parallèle le faisceau laser sortant de ladite source, une lentille de focalisation convergente (21), adaptée pour faire converger le faisceau provenant de ladite lentille à champ (9) en un point focal, **caractérisé en ce qu'**il comprend un couple de moyens optiques (3, 6) disposés en succession entre ladite source laser (22) et ladite lentille à champ (9), afin d'obtenir sur ladite lentille à champ (9) une impression de répartition d'énergie de section globalement elliptique.

**2.** Appareil selon la revendication 1, **caractérisé en ce que** lesdits moyens optiques (3, 6) sont un couple de prismes anamorphoseurs.

**3.** Appareil selon la revendication 2, **caractérisé en ce que** lesdits prismes anamorphoseurs (3, 6) sont disposés avec leurs sommets dirigés dans des directions globalement opposées l'une à l'autre.

**4.** Appareil selon la revendication 2, **caractérisé en ce que** le premier prisme anamorphoseur (3) plus proche de la source laser (22) a une régulation de la position spatiale commandée par un micromètre (23).

**5.** Appareil selon la revendication 2, **caractérisé en ce que** le deuxième prisme anamorphoseur (6) est fixe.

**6.** Appareil selon la revendication 1, **caractérisé en ce que** ladite source laser (22) est en fibre optique et une fixation (20) pour fibre optique est prévue.

Fig. 1

Fig. 4

Fig. 5

Fig. 2

Fig. 6

Fig. 7

Fig. 3

Fig. 4bis

Fig. 5bis

Fig. 8

Fig. 1bis